# EUROPEAN PATENT APPLICATION

(11) **EP 2 045 944 A1**
(43) Date of publication of application: **08.04.2009**
(21) Application number: 07791235.0
(22) Date of filing: 24.07.2007
(51) Int. Cl.: H04J 15/00, H04B 7/04

(54) **RECEPTION DEVICE, TRANSMISSION DEVICE, AND COMMUNICATION METHOD**

(30) Priority: 24.07.2006 JP 2006201322; 18.04.2007 JP 2007109345; 19.07.2007 JP 2007188573
(71) Applicant: Panasonic Corporation, Kadoma-shi Osaka 571-8501 (JP)
(72) Inventor: HOSHINO, Masayuki c/o Panasonic Corporation IPROC, Osaka 540-6207 (JP); HIRAMATSU, Katsuhiko c/o Panasonic Corporation IPROC, Osaka 540-6207 (JP)
(74) Representative: Grünecker, Kinkeldey, Stockmair & Schwanhäusser Anwaltssozietät
(86) International application number: PCT/JP2007/064510
(87) International publication number: WO 2008/013173

(57) **Abstract**

It is possible to provide a transmission device, a reception device, and a communication method which can improve a throughput in a MIMO system performing a precoding process. Each of beams formed by the transmission device are one-to-one correlated to an arrangement position of the uplink control channel so that the arrangement position of the uplink control channel is different in a block for each of beams. The reception device which has selected different beams arranges the uplink control channel at the arrangement position in the block corresponding to the selected beam and transmits the uplink control channel to the transmission device.

## Description

### Technical Field

The present invention relates to a receiving apparatus, transmitting apparatus and communication method used in radio communication systems using a MIMO (Multiple Input Multiple Output) technique of performing radio communication by receiving radio signals transmitted from a plurality of antenna elements by a plurality of antenna elements.

### Background Art

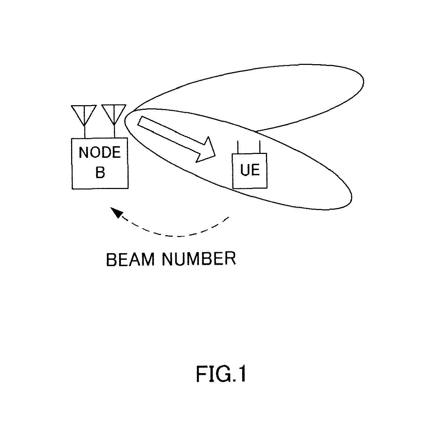

Up till now, the MIMO (Multiple Input Multiple Output) system using array antennas for transmission and reception attracts attentions as a system for realizing high speed transmission using limited frequency bands efficiently. In particular, with precoding, by using a beam according to a feedback from a terminal amongst predetermined beam patterns, as shown in FIG.1, it is possible to strengthen the signal intensity upon performing transmission with the terminal and associate different beams with other terminals, thereby acquiring a multi-user diversity effect (see Non-Patent Document 1).

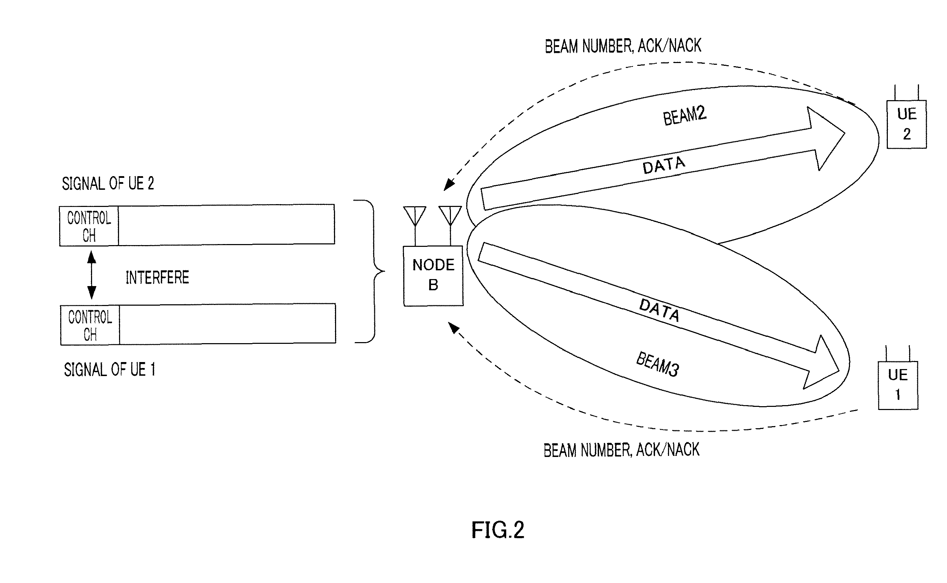

Assume that data is transmitted to a plurality of terminals utilizing precoding. That is, as shown in FIG.2, a case is possible where a plurality of terminals transmit at the same time uplink control channels such as feedback signals for beam selection and ACK or NACK of downlink data demodulation result.
Non-Patent Document 1: "MIMO for Long Term Evolution" R1-050889 Agenda Item: 10.5.2 3GPP TSG RAN WG1 Meeting #42, London, UK, 29 August -2 September,2005

### Disclosure of Invention

### Problem to be Solved by the Invention

However, these uplink control channels require reliability, and, consequently, it is necessary to increase transmission power and use transmission parameters of great noise robustness (such as a coding rate and modulation scheme) upon mutual interference. As a result, a use efficiency of resources used for data transmission in the uplink decreases, which reduces throughput.

It is therefore an object of the present invention to provide a receiving apparatus, transmitting apparatus and communication method for improving throughput in MIMO systems that perform precoding processing.

### Means for Solving the Problem

The receiving apparatus of the present invention employs a configuration having: a receiving section that receives a signal after precoding processing in a transmitting apparatus of communicating party; a beam selecting section that selects a beam of a highest received quality from a plurality of beams formed by the transmitting apparatus based on the received signal; a control channel generating section that, using an index showing the selected beam as feedback information, generates a control channel including the feedback information; an allocating section that allocates the generated control channel to a region associated with a received beam based on information associating the plurality of beams with regions to which the control channel is allocated in a block storing data; and a transmitting section that transmits the control channel allocated to the region associated with the received beam, to the transmitting apparatus.

The transmitting apparatus of the present invention employs a configuration having: a holding section that holds information associating a plurality of beams formed by a transmitting apparatus with regions in a block for a control channel allocated by a receiving apparatus of a communicating party, and an index of a formed beam directed to the receiving apparatus; a receiving section that receives the control channel transmitted from the receiving apparatus; and a demultiplexing section that demultiplexes the received control channel based on a region associated with the held index of the beam.

The communication method includes: an allocating step of allocating a control channel to a region associated with a received beam based on information associating a plurality of beams formed by a transmitting apparatus with regions to which the control channel is allocated by a receiving apparatus to a block storing data; a transmitting step of transmitting the control channel allocated to the region associated with the received beam, to the transmitting apparatus; a receiving step of receiving the control channel transmitted from the receiving apparatus; and a demultiplexing step of demultiplexing the received control channel based on the region associated with an index of a beam directed to the receiving apparatus.

### Advantageous Effect of the Invention

According to the present invention, it is possible to improve throughput in MIMO systems that perform precoding processing.

### Brief Description of Drawings

FIG.1 is a pattern diagram showing a state where a beam is formed by precoding;
FIG.2 is a pattern diagram showing a state where a plurality of terminals transmit uplink control channels at the same time;
FIG.3 is a block diagram showing the configuration of a receiving apparatus according to Embodiment 1 of the present invention;
FIG.4 illustrates association relationships between beam indexes and control channel allocation positions;
FIG.5 is a block diagram showing the configuration of a transmitting apparatus according to Embodiment 1 of the present invention;
FIG.6 is a sequence diagram showing the operations of the receiving apparatus shown in FIG.3 and transmitting apparatus shown in FIG.5;
FIG.7 is a block diagram showing the configuration of a receiving apparatus according to Embodiment 2 of the present invention;
FIG.8 is a flowchart showing the processing of the multiplexing section shown in FIG.7;
FIG.9 is a block diagram showing the configuration of a transmitting apparatus according to Embodiment 2 of the present invention;
FIG.10 illustrates association relationships between an allocation position of a close range control channel, beam indexes and control channel allocation positions;
FIG.11 is a pattern diagram showing the distance relationship between a transmitting apparatus and receiving apparatuses;
FIG.12 is a block diagram showing the configuration of a receiving apparatus according to Embodiment 3 of the present invention;
FIG.13 is a block diagram showing the configuration of a transmitting apparatus according to Embodiment 3 of the present invention;
FIG.14 illustrates interleaving patterns;
FIG.15 is a block diagram showing the configuration of a receiving apparatus according to Embodiment 4 of the present invention;
FIG.16 is a block diagram showing the configuration of a transmitting apparatus according to Embodiment 4 of the present invention;
FIG.17 illustrates the association relationships between mode information and control channel allocation areas, and association relationships between beam indexes and control channel allocation positions in the precoding mode;
FIG.18 is a block diagram showing the configuration of a receiving apparatus according to Embodiment 5 of the present invention;
FIG.19 illustrates a state of transmission power control in the transmission power control section shown in FIG.18;
FIG.20 illustrates a state of another transmission power control in the transmission power control section shown in FIG.18;
FIG.21 is a block diagram showing the configuration of a receiving apparatus according to Embodiment 6 of the present invention;
FIG.22 illustrates a state of transmission power control in the transmission power control section shown in FIG.21;
FIG.23 illustrates a state of transmission power control in the transmission power control section shown in FIG.21;
FIG.24 is a block diagram showing the configuration of a receiving apparatus according to Embodiment 7 of the present invention;
FIG.25 is a block diagram showing the configuration of a transmitting apparatus according to Embodiment 7 of the present invention;
FIG.26 illustrates an allocation beam ID selection method according to Embodiment 7 of the present invention;
FIG.27 is a block diagram showing the configuration of a transmitting apparatus according to Embodiment 8 of the present invention; and
FIG.28 illustrates an allocation beam ID selection method according to Embodiment 8 of the present invention.

### Best Mode for Carrying out the Invention

Embodiments of the present invention will be explained below in detail with reference to the accompanying drawings. However, in these Embodiments, components having identical functions will be allocated the same reference numerals and explanations will be omitted.

### (Embodiment 1)

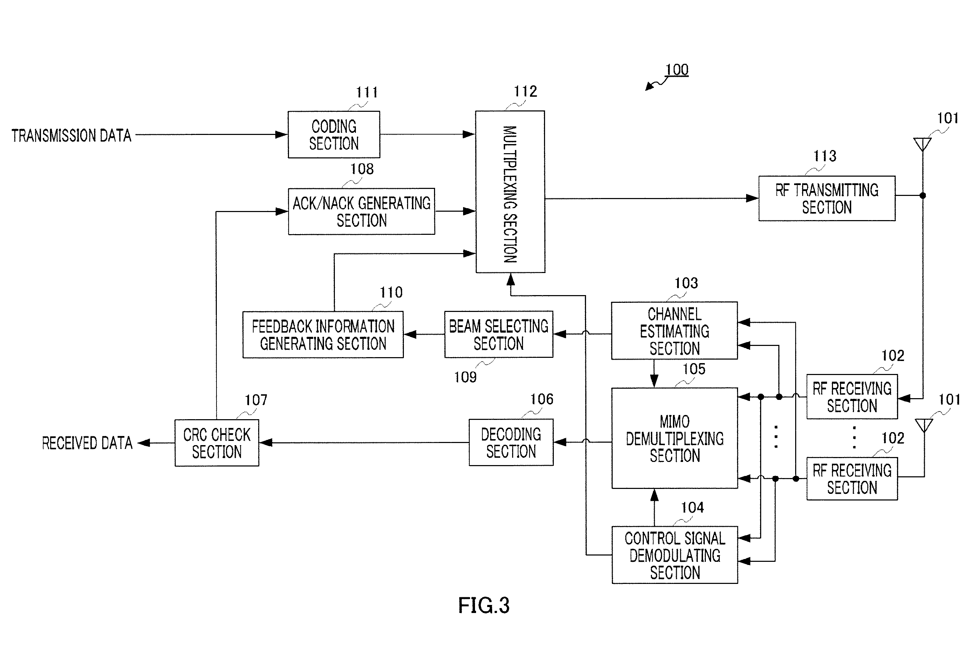

FIG.3 is a block diagram showing the configuration of receiving apparatus 100 according to Embodiment 1 of the present invention. In this figure, RF receiving section 102 receives signals transmitted from transmitting apparatus 150, which will be described later, via antenna 101, performs radio receiving processing such as down-conversion and D/A conversion on the received signals, and, in the signals after radio receiving processing, transmits the pilot signal to channel estimating section 103, the control signal to control signal demodulating section 104 and the data signal to MIMO demultiplexing section 105.

Channel estimating section 103 calculates estimated channel responses (i.e., channel matrix) of all combinations of transmitting antennas and receiving antennas using the pilot signal outputted from RF receiving section 102, and outputs the calculated estimated channel responses to MIMO demultiplexing section 105 and beam selecting section 109.

Control signal demodulating section 104 demodulates the control signal outputted from RF receiving section 102 and outputs the beam index included in the demodulated control signal to MIMO demultiplexing section 105 and multiplexing section 112.

MIMO demultiplexing section 105 MIMO-demultiplexes the received signal outputted from RF receiving section 102 using the channel matrix outputted from channel estimating section 103 and the beam index outputted from control signal demodulating section 104, and outputs the demodulation result in a soft decision value to decoding section 106.

Decoding section 106 decodes the demodulation result outputted from MIMO demultiplexing section 105 and outputs the decoded data signal (i.e., decoded data) to CRC check section 107.

CRC check section 107 performs a CRC check of the decoded data outputted from decoding section 106 to detect whether there is an error. CRC check section 107 outputs the error detection result of the decoded data to ACK/NACK generating section 108 and outputs decoded data without error as received data.

ACK/NACK generating section 108 generates ACK or NACK according to the error detection result of the decoded data outputted from CRC check section 107. That is, ACK/NACK generating section 108 generates ACK if there is no error, and generates NACK if there is error, and outputs the generated ACK or NACK to multiplexing section 112.

Beam selecting section 109 measures the received quality associated with each predetermined beam by multiplying the channel matrix by the weights associated with the beams, and selects the beam of the best received quality. The index of the selected beam is outputted to feedback information generating section 110.

Feedback information generating section 110 generates feedback information including the beam index outputted from beam selecting section 109, and outputs the generated feedback information to multiplexing section 112. Here, ACK/NACK generating section 108 and feedback information generating section 110 function as a control channel generating means.

Coding section 111 encodes transmission data and outputs the encoded data to multiplexing section 112.

Multiplexing section 112, which functions as an allocating means and holds the association relationships between beam indexes and control channel allocation positions (i.e., transmission formats), forms a control channel using the ACK or NACK outputted from ACK/NACK generating section 108 and feedback information outputted from feedback information generating section 110, multiplexes the formed control channel and the transmission data outputted from coding section 111 in the transmission format associated with the beam index outputted from control signal demodulating section 104, and outputs the multiplexed signal to RF transmitting section 113.

RF transmitting section 113 performs radio transmitting processing such as D/A conversion and up-conversion on the signal outputted from multiplexing section 112, and outputs the signal after radio transmitting processing from antenna 101 to transmitting apparatus 150.

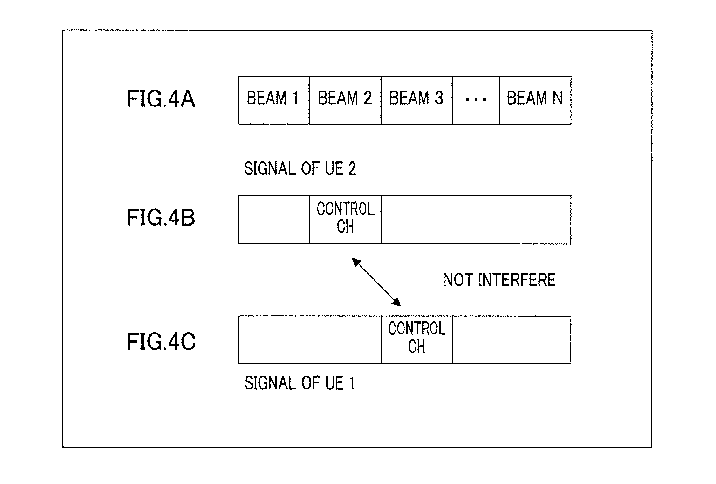

The association relationships between beam indexes and control channel allocation positions, which are held by multiplexing section 112, will be explained below using FIG.4. Here, in the LTE (Long Term Evolution), a long block and short block, which are defined as two kinds of FFT units, are collectively referred to as blocks. Further, assume that a control channel is allocated in blocks.

If beams formed by transmitting apparatus 150 are beams 1 to N, for example, as shown in FIG.4A, multiplexing section 112 holds information associating beams 1 to N with N equal regions dividing a block, by one-to-one association. If UE 1 is assigned to beam 3 and UE 2 is assigned to beam 2, UE 2 allocates the control channel to the region shown in FIG.4B and UE 1 allocates the control channel to the region shown in FIG.4C. By this means, the control channel of UE 1 and the control channel of UE 2 are allocated to different regions, so that it is possible to prevent mutual interference. Although a case has been described above where a block is divided into N equal regions, the present embodiment is not limited to this.

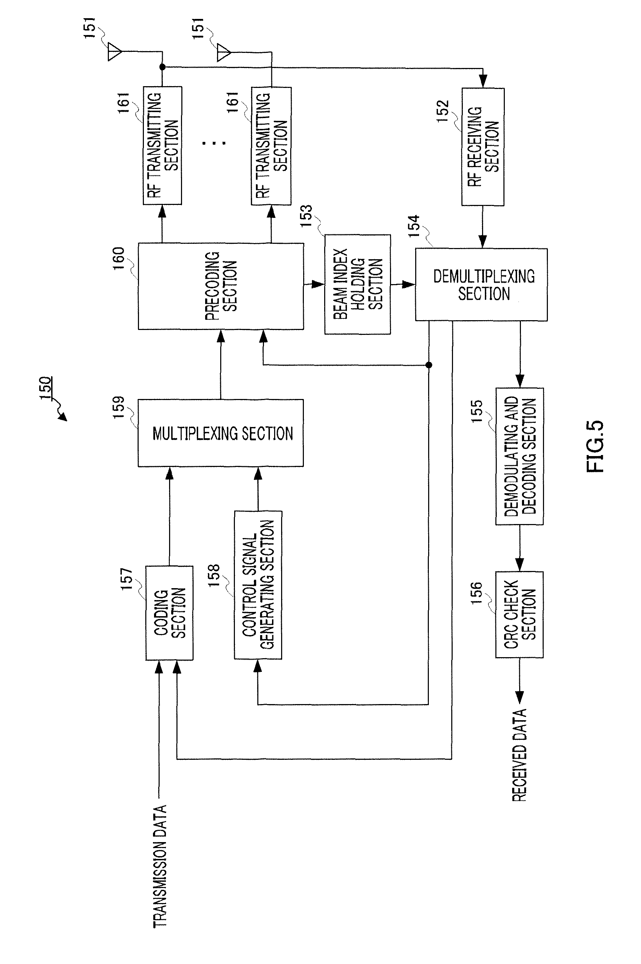

FIG.5 is a block diagram showing the configuration of transmitting apparatus 150 according to Embodiment 1 of the present invention. In this figure, RF receiving section 152 receives a signal transmitted from receiving apparatus 100 via antenna 151, performs radio receiving processing such as down-conversion and D/A conversion on the received signal, and outputs the signal after radio receiving apparatus to demultiplexing section 154.

Beam index holding section 153 holds in advance the association relationships between the beam indexes formed in transmitting apparatus 150 and transmission formats used in the uplink, and holds a beam index outputted from precoding processing section 160, which will be described later, and demultiplexing section 154 reads out the transmission format associated with the held index. Further, the index outputted from precoding processing section 160 is held until receiving apparatus 100 receives an uplink signal.

Demultiplexing section 154 specifies the position of the control channel included in the signal outputted from RF receiving section 152, based on the transmission format read from beam index holding section 153, and demultiplexes the control channel into the uplink transmission data, feedback information (i.e., beam index) and ACK or NACK. The demultipelxed uplink transmission data is outputted to demodulating and decoding section 155, the demultiplexed feedback information to control signal generating section 158 and precoding section 160, and the ACK or NACK to coding section 157.

Demodulating and decoding section 155 demodulates and decodes the uplink transmission data outputted from demultiplexing section 154, and outputs the decoded data to CRC check section 156.

CRC check section 156 performs a CRC check of the decoded data outputted from demodulating and decoding section 155, detects whether the decoded data contains error, and outputs the decoded data without error as received data.

Coding section 157 encodes transmission data and outputs new transmission data or retransmission data according to ACK or NACK outputted from demultiplexing section 159. That is, coding section 157 outputs new transmission data to demultiplexing section 159 when acquiring ACK, and outputs retransmission data to multiplexing section 159 when acquiring NACK.

Control signal generating section 158 generates a control signal including the beam index outputted from demultiplexing section 154, and outputs the generated control signal to demultiplexing section 159.

Multiplexing section 159 multiplexes the data outputted from coding section 157 and the control signal outputted from control signal generating section 158, and outputs the multiplexed signal to precoding processing section 160.

Precoding processing section 160 refers to the beam index included in the feedback information outputted from demultiplexing section 154, identifies the beam for the associating user and outputs the identified beam index to beam index holding section 153. Further, precoding section 159 multiplies the signal outputted from multiplexing section 159 by the weight associated with the antenna for the identified beam, and outputs the signal multiplied the weight to RF transmitting section 161 of the associated antenna.

RF transmitting section 161 performs radio transmitting processing such as D/A conversion and up-conversion on the signal outputted from precoding section 160, and transmits the signal after radio transmitting processing from antenna 151 to receiving apparatus 100.

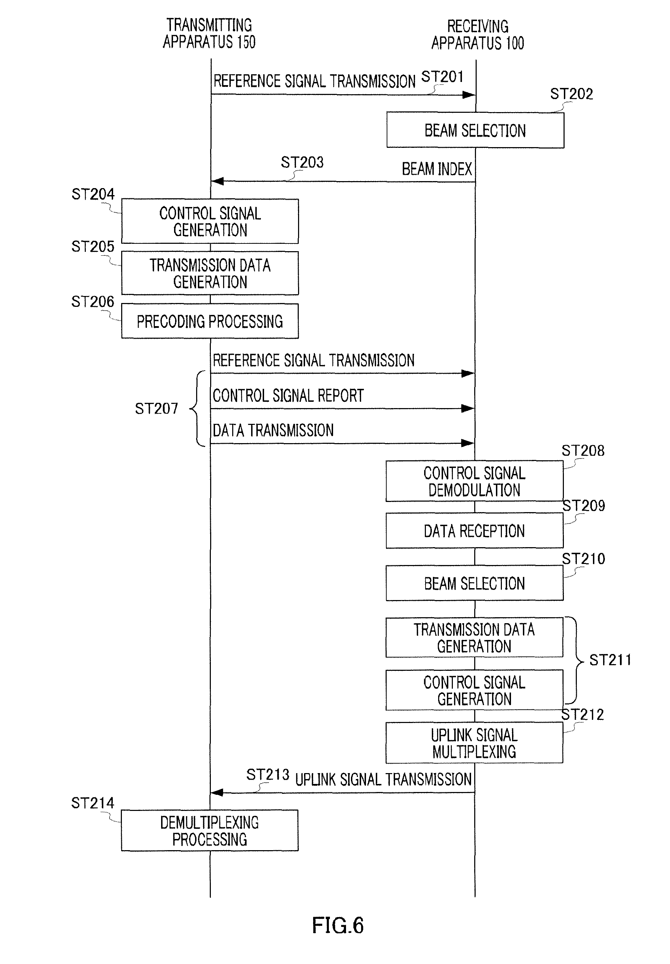

Next, the operations of above-noted receiving apparatus 100 and transmitting apparatus 150 will be explained using FIG.6. In FIG.6, in step (hereinafter simply "ST") 201, reference signals are transmitted from transmitting apparatus 150 to receiving apparatus 100. In ST 202, the received quality of each beam is measured using the reference signals transmitted in ST 201 based on the channel matrixes estimated by beam selecting section 109 in receiving apparatus 100, to select the beam of the highest received quality.

In ST 203, feedback information including the index of the selected beam is feedback from receiving apparatus 100 to transmitting apparatus 150. In ST 204, control signal generating section 158 generates the feedback beam index as a control signal.

In ST 205, transmitting apparatus 150 generates transmission data. In ST 206, precoding processing section 160 performs precoding processing. In ST 207, the reference signal, control signal and data are transmitted from transmitting apparatus 150 to receiving apparatus 100.

In ST 208, control signal demodulating section 104 of receiving apparatus 100 demodulates the control signal, and acquires the beam index included in the control signal. In ST 209, MIMO demultiplexing section 105 and decoding section 106 demodulates and decodes the received data using the estimated channel response associated with the beam specified by the beam index acquired in ST 208.

In ST 210, similar to the processing in ST 202, the beam of the highest received quality is selected using the reference signal transmitted in ST 207.

In ST 211, receiving apparatus 100 generates uplink transmission data and control signal, and, in ST 212, multiplexes the transmission data and control signal generated in ST 211. In this case, the control signal is allocated to a region associated with the beam index acquired in ST 208.

In ST 213, an uplink signal is transmitted from receiving apparatus 100 to transmitting apparatus 150. In ST 214, demultiplexing section 154 of transmitting apparatus 150 demultiplexes the uplink signal into the control signal and other signals based on the region associated with the beam specified by the beam index generated in ST 204.

As described above, according to Embodiment 1, by associating a plurality of beams formed by the transmitting apparatus with respective uplink control channel allocation positions, control channels transmitted from the terminals receiving respective beams are allocated to different positions in the block, so that it is possible to prevent mutual interference, improve the use efficiency of resources used for uplink data transmission and improve throughput.

### (Embodiment 2)

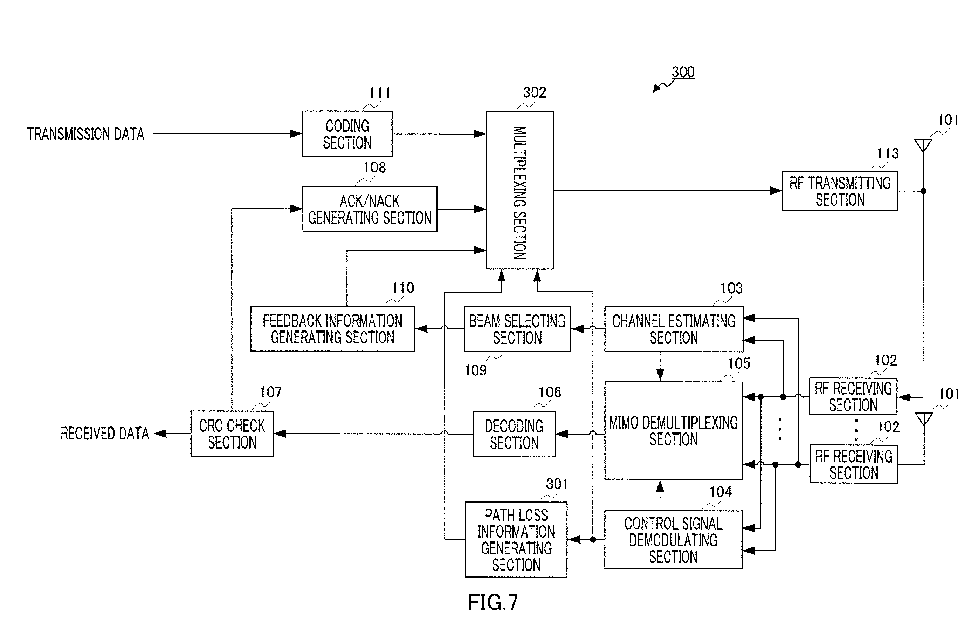

FIG.7 is a block diagram showing the configuration of receiving apparatus 300 according to Embodiment 2 of the present invention. FIG.7 is different from FIG.3 in adding path loss information generating section 301 and replacing multiplexing section 112 by multiplexing section 302.

In FIG.7, path loss information generating section 301 extracts information about path loss (i.e., attenuation caused by propagation via long distance) from a control signal outputted from control signal demodulating section 104, and outputs the extracted information to multiplexing section 302 as path loss information. Examples of information about path loss include parameters of modulation schemes and coding rates. To be more specific, when modulation schemes of high-order M-ary modulation values such as 16QAM and 64QAM are used amongst parameters of available modulation schemes and coding rates for transmitting apparatus 350, which will be described later, or when high coding rates such as 1/2 and 2/3 are used, it is possible to estimate that the path loss is small and the distance to transmitting apparatus 350 is close.

Further, other examples of information about path loss include a method of reporting transmission power in a broadcast channel. To be more specific, when transmission power of XdB is measured as the receiving power of YdB due to path loss in a propagation path, if the difference between transmission power and receiving power, (X-Y), is equal to or less than a given value, it is possible to estimate that the distance between transmitting apparatus 350 and receiving apparatus 300 is close. Thus, path loss information is used to estimate the distance between the receiving apparatus and the transmitting apparatus.

Multiplexing section 302 holds, as a close-range region, an allocation position of the control channel transmitted when the distance between receiving apparatus 300 and transmitting apparatus 350 is close, and holds in advance the association relationships between beam indexes and control channel allocation positions.

Further, multiplexing section 302 compares the scales of the path loss information outputted from path loss information generating section 301 (here, assume the parameters of the coding scheme and coding rate) and of a predetermined threshold, and estimates that the distance between receiving apparatus 300 and transmitting apparatus 350 is close (i.e., close range) when the path loss information is equal to or greater than the predetermined threshold, and estimates that the distance between receiving apparatus 300 and transmitting apparatus 350 is far when the scale of the path loss information is less than the predetermined threshold.

Further, as a result of the comparison of the scales of path loss information and predetermined threshold, if the distance between receiving apparatus 300 and transmitting apparatus 350 is estimated to be close, multiplexing section 302 forms a control channel from the ACK or NACK outputted from ACK/NACK generating section 108 and feedback information outputted from feedback information generating section 110, allocates the formed control channel in the close-range region and allocates the transmission data outputted from coding section 111 in a region other than the close-range region and multiplexes the allocated transmission data.

By contrast , as a result of the comparison of the scales of the path loss information and predetermined threshold, if the distance between receiving apparatus 300 and transmitting apparatus 350 is estimated to be far, multiplexing section 302 forms a control channel from the ACK or NACK and feedback information, multiplexes the formed control channel and transmission data in a transmission format associated with the beam index outputted from control signal demodulating section 104, and outputs the multiplexed signal to RF transmitting section 113.

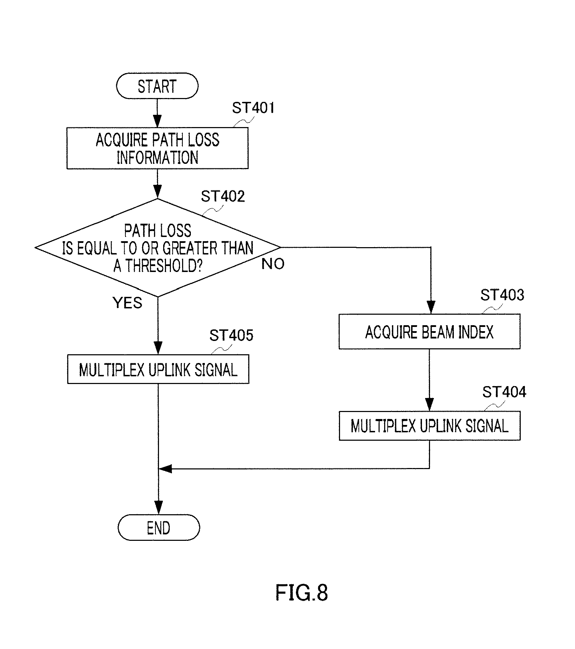

FIG.8 shows the processing of above-noted multiplexing section 302. In FIG.8, in ST 401, path loss information is acquired from path loss information generating section 301. In ST 402, whether the path loss information is equal to or greater than a threshold is determined, and the flow proceeds to ST 405 when the path loss information is equal to or greater than the threshold, and proceeds to ST 403 when the scale of the path loss information is less than the threshold

In ST 403, a beam index is acquired from control signal demodulating section 104. In ST 404, uplink signals are multiplexed in the transmission format associated with the beam index acquired in ST 403.

On the other hand, in ST 405, a control channel is allocated to a close-range region, data is allocated to a region other than the close-range region, and the uplink signals are multiplexed.

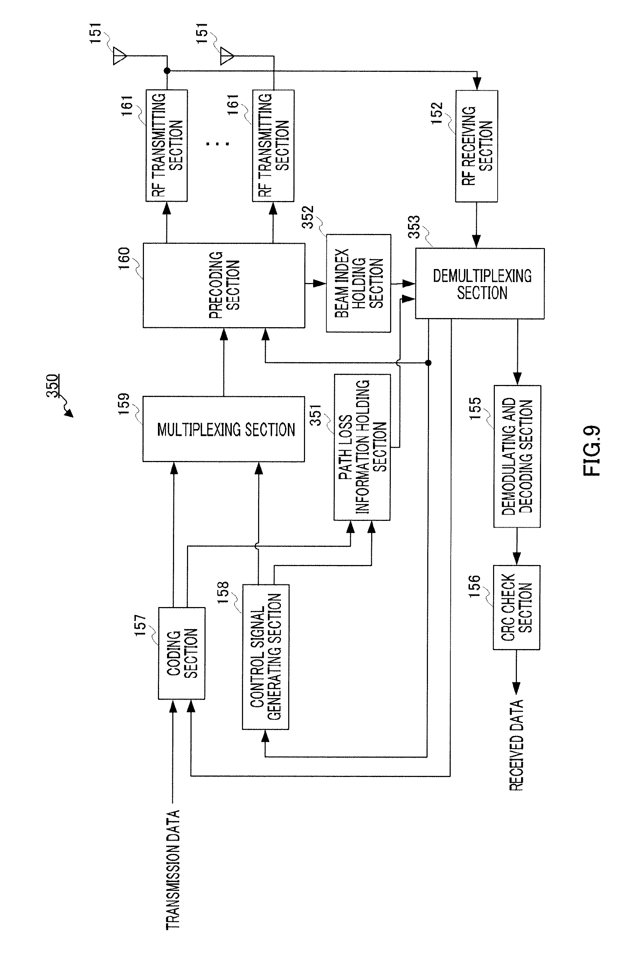

FIG.9 is a block diagram showing the configuration of transmitting apparatus 350 according to Embodiment 2 of the present invention. FIG.9 is different from FIG.5 in adding path loss information holding section 351 and replacing beam index holding section 153 and demultiplexing section 154 by beam index holding section 352 and demultiplexing section 353, respectively.

Path loss information holding section 351 stores information about path loss outputted from coding section 157 and control signal generating section 158, as the path loss information about the user. As described above, examples of information about path loss include parameters of a modulation scheme and coding rate. Further, in a method of reporting transmission power in a broadcast channel, it is possible to acquire information about path loss by regularly feeding back values measured in the receiving side.

Beam index holding section 352, which holds in advance as a close-range region the allocation position of the control channel transmitted when the distance between receiving apparatus 300 and transmitting apparatus 350 is close and the association relationships between beam indexes and control channel allocation positions, holds the beam index outputted from precoding processing section 160, and a transmission format associated with the held index is read out by demultiplexing section 353.

Demultiplexing section 353 specifies the position of the control channel included in the signal outputted from RF receiving section 152 based on the path loss information read from path loss information holding section 351 and transmission format read from beam index holding section 352, and demultiplexes the control channel into the uplink transmission data, feedback information (i.e., beam index) and ACK or NACK. The demultipelxed uplink transmission signal is outputted to demodulating and decoding section 155, the feedback information to control signal generating section 158 and precoding processing section 160, and the ACK or NACK to coding section 157.

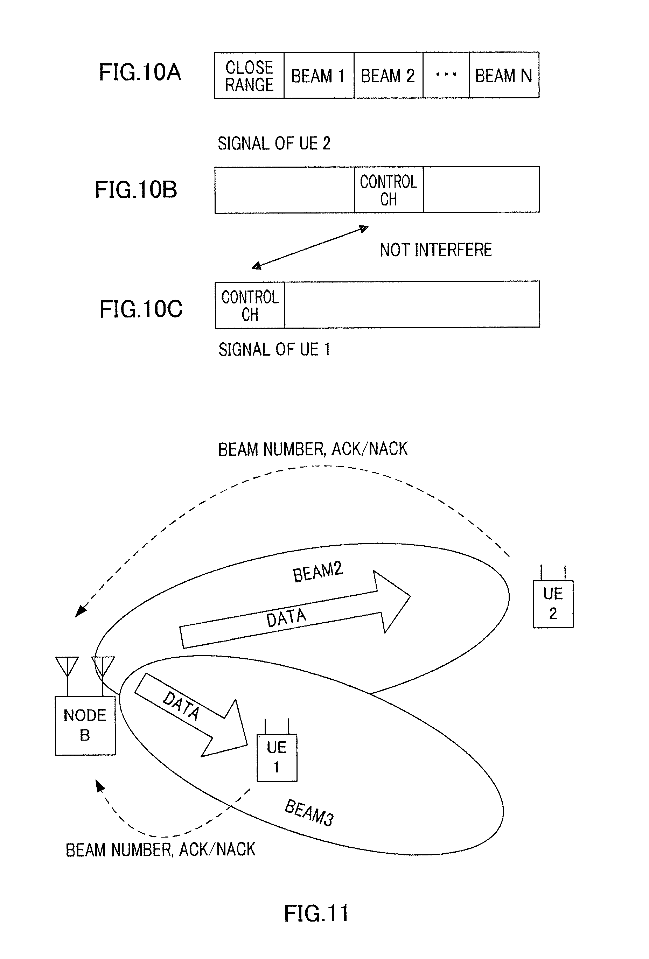

The association relationships between an allocation position of the close-range control channel, beam indexes and allocation positions of control channels held in beam index holding section 352 will be explained below using FIG.10. Under conditions that beams formed by transmitting apparatus 350 are beams 1 to N, for example, as shown in FIG.10A, multiplexing section 302 and beam index holding section 352 holds, as the allocation position of the close-range control channel, one of the N+1 regions acquired by dividing a block into N+1 equal regions, and holds information associating the rest of the regions with beams 1 to N by one-to-one association.

As shown in FIG.11, if Node B as transmitting apparatus 350 and UE 1 as receiving apparatus 300 are close to each other and Node B and UE 2 as receiving apparatus 300 are far from each other, UE 1 is assigned beam 3, and, when beam 2 is assigned to UE 2, UE 2 allocates a control channel to the region shown in FIG.10B and UE 1 allocates a control channel to the region shown in FIG.10C. Further, although a case has been described above where a block is divided into N+1 equal regions, the present embodiment is not limited to this.

Thus, according to Embodiment 2, by concentrating control channels transmitted from receiving apparatuses of small path loss and low power requirement in a close-range region and distributing control channels transmitted from receiving apparatuses of much path loss and high power requirement in regions associated with beam indexes, so that timing differences are likely to be caused, thereby preventing interference from control channels transmitted from a far receiving apparatus having a great interference influence.

### (Embodiment 3)

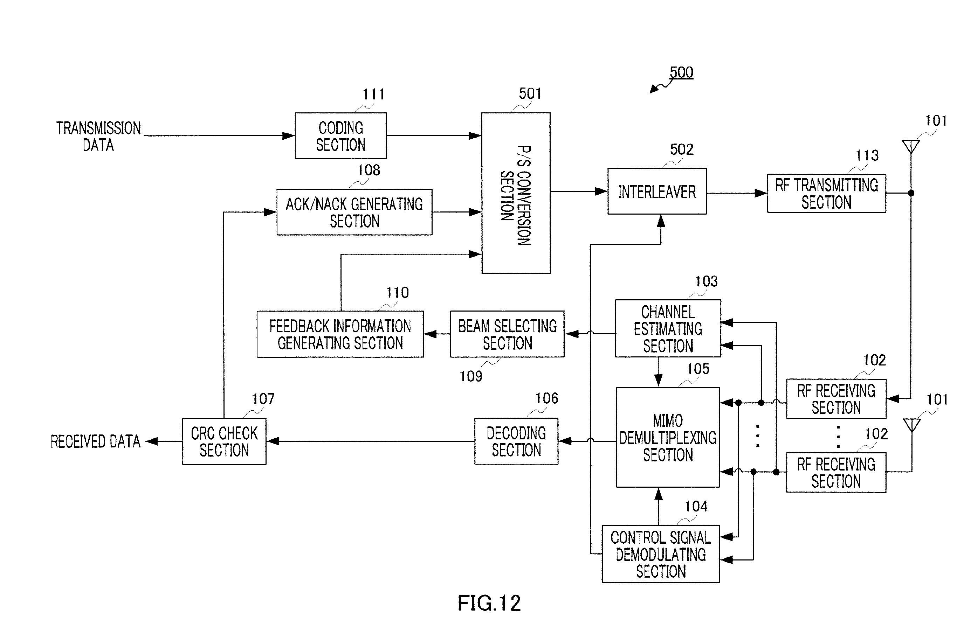

FIG.12 is a block diagram showing the configuration of receiving apparatus according to Embodiment 3 of the present invention. FIG.12 is different from FIG.3 in adding interleaver 502 and replacing multiplexing section 112 by P/S conversion section 501.

In FIG.12, P/S conversion section 501 performs P/S conversion of parallel sequences comprised of ACK or NACK outputted from ACK/NACK generating section 108, feedback information outputted from feedback information generating section 110, formed control channel, and transmission data outputted from coding section 111, into a serial sequence, and outputs the serial sequence signal to interleaver 502.

Interleaver 502 has interleaving patterns for beam indexes, and interleaves the signal outputted from P/S conversion section 501 by an interleaving pattern associated with the beam index outputted from control signal demodulating section 104, and outputs the interleaved signal to RF transmitting section 113.

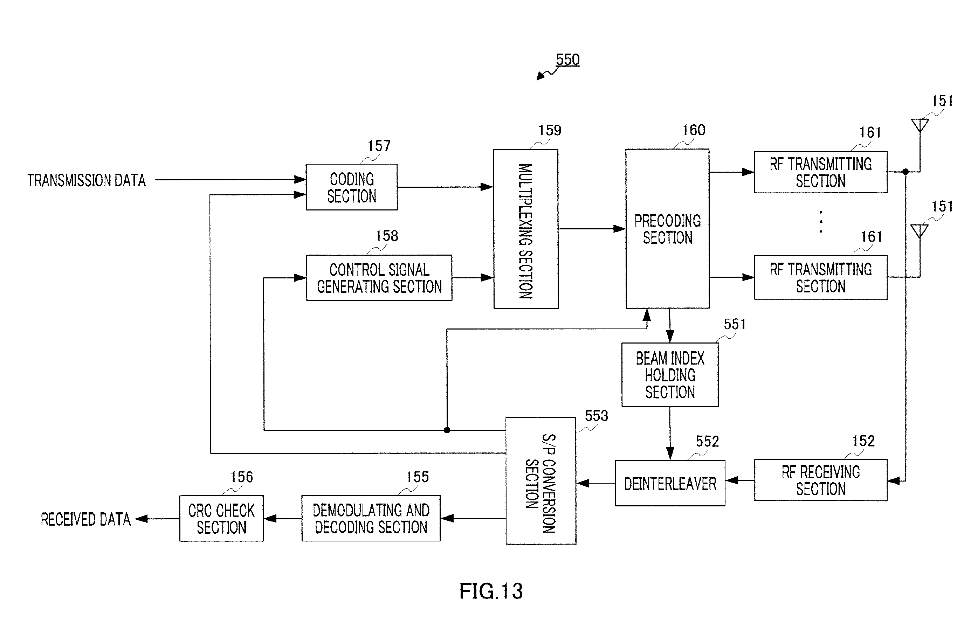

FIG.13 is a block diagram showing the configuration of transmitting apparatus 550 according to Embodiment 3 of the present invention. FIG.13 is different from FIG.5 in adding deinterleaver 552 and replacing beam index holding section 153 and demultiplexing section 154 by beam index holding section 551 and S/P conversion section 553, respectively.

Beam index holding section 551 holds a beam index outputted from precoding section 160 and deinterleaver 552 reads out the held index.

Deinterleaver 552, which has interleaving patterns for beam indexes, deinterleaves a signal outputted from RF receiving section 152 by the interleaving pattern associated with the beam index read from beam index holding section 551 and outputs the deinterleaved signal to S/P conversion section 553.

S/P conversion section 553 acquires a parallel sequence by performing S/P conversion of the serial sequence signal outputted from deinterleaver 552 into the parallel sequence signal, and outputs the uplink transmission data to demodulating and decoding section 155, feedback information to control signal generating section 158 and precoding section 160, and ACK or NACK to coding section 157. Here, deinterleaver 553 and S/P conversion section 553 function as a demultiplexing means.

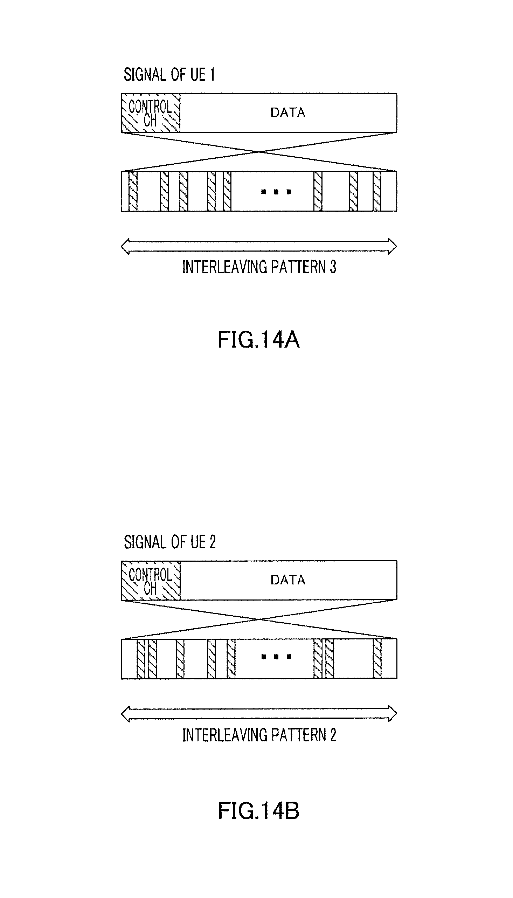

Here, interleaving patterns of interleaver 502 and deinterleaver 552 will be explained using FIG.14. Under conditions that beams 1 to N are formed by transmitting apparatuses 550, interleaver 502 and deinterleaver 552 have interleaving patterns associated with beams 1 to N by one-to-one association. If beam 3 associated with interleaving pattern 3 is assigned to UE 1 and beam 2 associated with interleaving pattern 2 is assigned to UE 2, UE 1 performs interleaving using interleaving pattern 3 and allocates the control channel to predetermined positions with distributed manner as shown in FIG.14A, and UE 2 performs interleaving using interleaving pattern 2 and allocates the control channel to predetermined positions with distributed manner as shown in FIG.14B. By this means, the control channel of UE 1 and the control channel of UE 2 are allocated to different regions, so that it is possible to prevent mutual interference.

As described above, according to Embodiment 3, by associating beams formed by the transmitting apparatus with respective interleaving patterns and interleaving uplink signals including an uplink control channel using interleaving patterns associated with beams received by the terminal, control channels transmitted from the terminals receiving respective beams are allocated to different positions in the block, so that it is possible to prevent mutual interference, improve the use efficiency of resources used for uplink data transmission and improve throughput.

### (Embodiment 4)

With Embodiment 4 of the present invention, transmitting apparatus 650 and receiving apparatus 600, which have three modes of SU-MIMO (Single User-MIMO), precoding and open-loop transmission diversity, operates in a mode according to the propagation environment and switches between the above three modes according to the distance between transmitting apparatus 650 and receiving apparatus 600 and the movement speed of receiving apparatus 600. To be more specific, when the distance between transmitting apparatus 650 and receiving apparatus 600 is close, the SU-MIMO mode is used. Further, when the distance between transmitting apparatus 650 and receiving apparatus 600 is far and the movement speed of receiving apparatus 600 is slow, the precoding mode is used. Further, when the distance between transmitting apparatus 650 and receiving apparatus 600 is far and the movement speed of receiving apparatus 600 is fast, the open-loop transmission diversity mode is used. Information showing any three above-noted modes is referred to as mode information.

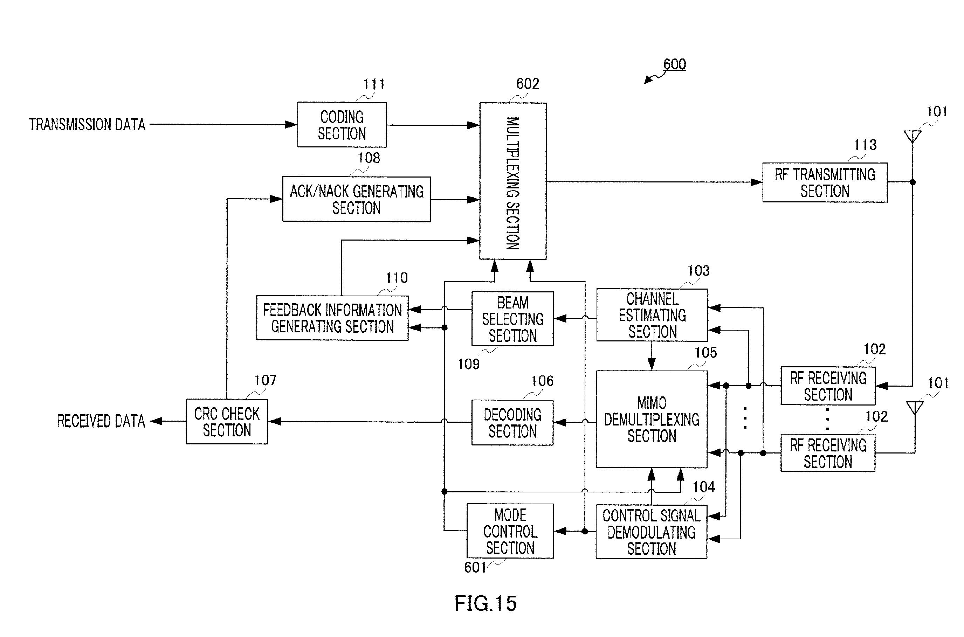

FIG.15 is a block diagram showing the configuration of receiving apparatus 600 according to Embodiment 4 of the present invention. FIG.15 is different from FIG.3 in adding mode control section 601 and replacing multiplexing section 112 by multiplexing section 602.

Mode control section 601 extracts mode information from a control signal outputted from control signal demodulating section 104 and outputs the extracted mode information to multiplexing section 602 while controlling MIMO demultiplexing section 105 and feedback information generating section 110 to use the mode specified by the mode information.

Multiplexing section 602 holds in advance the association relationships between the modes of SU-MIMO, precoding and open-loop transmission diversity and control channel allocation regions, and holds in advance the association relationships between beam indexes and control channel allocation positions in regions associated with the precoding mode.

Further, when the mode information outputted from mode control section 601 is the SU-MIMO or open-loop transmission diversity, multiplexing section 602 forms a control channel from the ACK or NACK outputted from ACK/NACK generating section 108 and feedback information outputted from feedback information generating section 110, allocates the formed control channel to a region associated with the mode and allocates transmission data outputted from coding section 111 to a region other than the region associated with the mode and multiplexes the result.

Further, when the mode information outputted from mode control section 601 shows the precoding, multiplexing section 602 forms a control channel from the ACK or NACK and feedback information, multiplexes the formed control channel and transmission data in the transmission format associated with a beam index outputted from control signal demodulating section 104, and outputs the multiplexed signal to RF transmitting section 113.

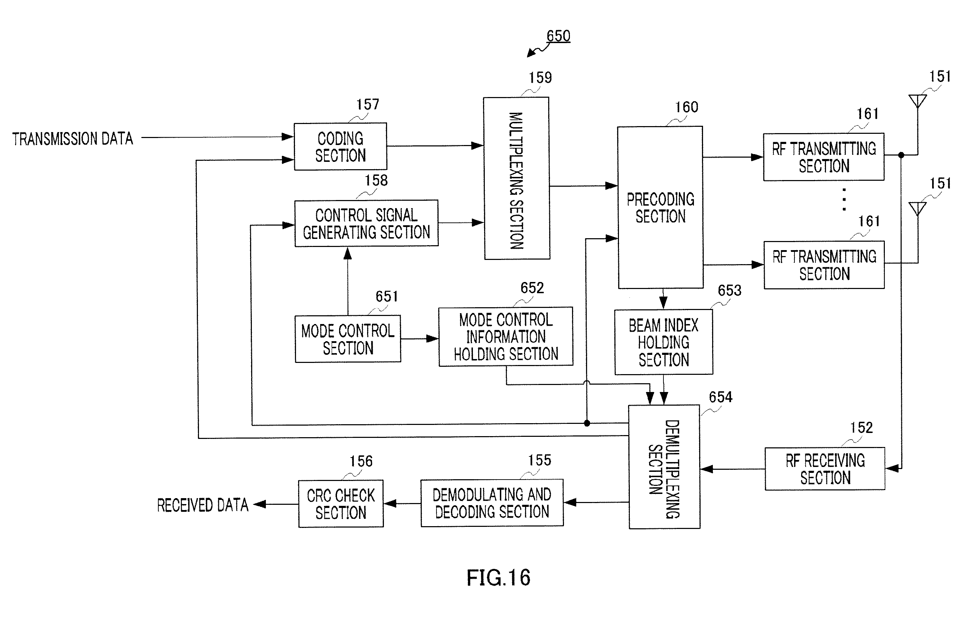

FIG.16 is a block diagram showing the configuration of transmitting apparatus 650 according to Embodiment 4 of the present invention. FIG.16 is different from FIG.5 in adding mode control section 651 and mode control information holding section 652 and replacing beam index holding section 153 and demultiplexing section 154 by beam index holding section 653 and demultiplexing section 654, respectively.

Mode control section 651 determines which mode is used, based on quality information (not shown) reported from receiving apparatus 600. The determined mode is outputted to control signal generating section 158 and control information holding section 652.

Mode control information holding section 652 associates in advance modes of SU-MIMO, precoding and open-loop transmission diversity with control channel allocation positions and holds the association relationships, and demultiplexing section 654 reads out the transmission format associated with the held mode.

Beam index holding section 653 associates in advance beam indexes with control channel allocation positions in a region associated with the precoding mode and holds the association relationships and holds a beam index outputted from precoding processing section 160, and demultiplexing section 654 reads out a transmission format associated with the held index.

Demultiplexing section 654 specifies the position of the control channel included in a signal outputted from RF receiving section 152 based on the transmission format read from mode control information holding section 652 and beam index holding section 352, and demultiplexes the control channel into the uplink transmission data, feedback information (i.e., beam index) and ACK or NACK. The demultipelxed uplink transmission signal is outputted to demodulating and decoding section 155, the feedback information to control signal generating section 158 and precoding processing section 160, and the ACK or NACK to coding section 157.

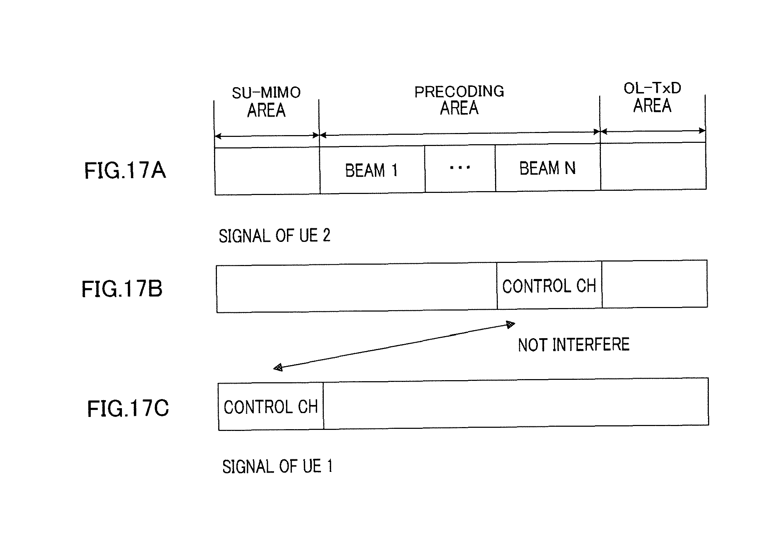

The association relationships between mode information held in multiplexing section 602 and allocation positions of a control channel, and association relationships between beam indexes and a control channel allocation position in the precoding mode will be explained below using FIG.17. Under conditions that beams 1 to N are formed by transmitting apparatuses 650, for example, as shown in FIG.17A, multiplexing section 602 holds one region which is the top of the block as the SU-MIMO area, one region which is the end of the block as the open-loop transmission diversity area and the rest of the regions as the precoding area, in the regions acquired by dividing the block into N+2 equal regions. Further, multiplexing section 602 holds information associating the regions of the precoding area with beams 1 to N by one-to-one association.

If UE 1 uses SU-MIMO and UE 2 uses precoding and is assigned beam N, UE 2 allocates a control channel to the region shown in FIG.17B and UE 1 allocates a control channel to the region shown in FIG.17B. Here, although a case has been described above where a block is divided into N+2 equal regions, the present embodiment is not limited to this.

As described above, according to Embodiment 4, by switching between SU-MIMO, precoding and open-loop transmission diversity according to the propagation environment, associating these modes with control channel allocation positions and associating beam indexes with control channel allocation positions in a region associated with the precoding mode, it is possible to prevent interference from control channels transmitted from terminals using respective modes and prevent interference from control channels transmitted from terminals receiving respective beams in precoding, thereby improving the use efficiency of resources used for uplink data transmission and improving throughput.

### (Embodiment 5)

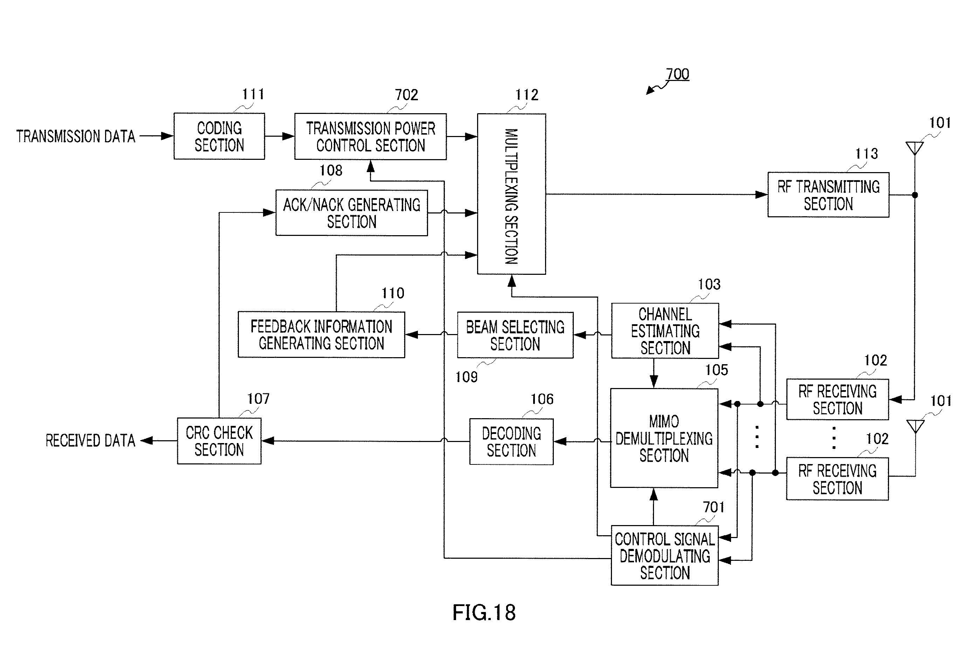

FIG.18 is a block diagram showing the configuration of receiving apparatus 700 according to Embodiment 5 of the present invention. FIG.18 is different from FIG.3 in adding transmission power control section 702 and replacing control signal demodulating section 104 by control signal demodulating section 701.

Control signal demodulating section 701 demodulates a control signal outputted from RF receiving section 102 and outputs a beam index included in the demodulated control signal to MIMO demultiplexing section 105, multiplexing section 112 and transmission power control section 702.

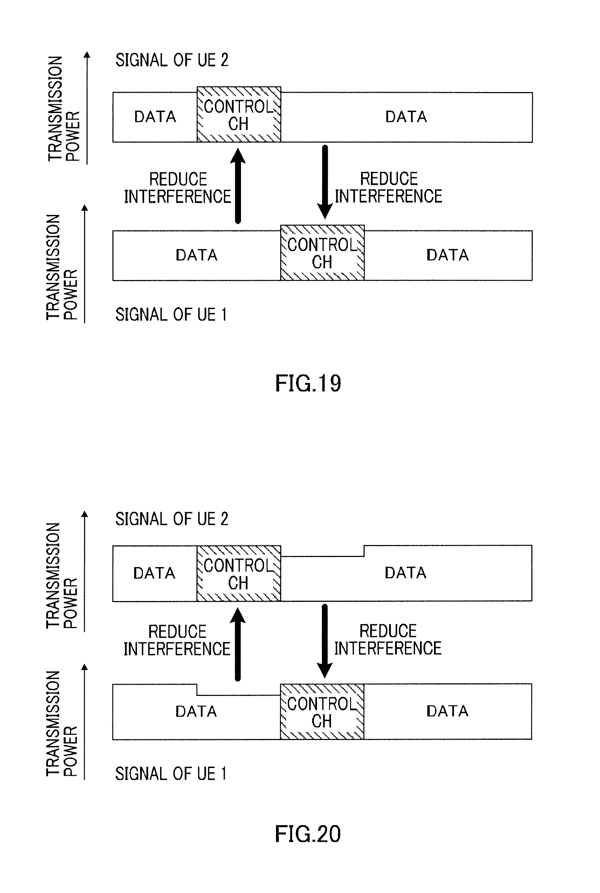

Transmission power control section 702 decreases the transmission power of transmission data outputted from coding section 111 a predetermined value lower than the transmission power of the control channel, based on the beam index outputted from control signal demodulating section 701, and outputs the result to multiplexing section 112. FIG.19 illustrates this state. Transmission power control section 702 sets the transmission power of transmission data ("DATA" in the figure) lower than the transmission power of the control channel. By this means, it is possible to reduce the interference, caused by transmission data transmitted from the terminal (e.g., UE 2 in the figure), on the control channel of another user (e.g., UE 1 in the figure).

As described above, according to Embodiment 5, by setting the transmission power of transmission data a predetermined value lower than the transmission power of a control channel, it is possible to reduce the interference, caused by transmission data transmitted from the terminal, on the control channel of another user.

Further, as shown in FIG.20, transmission power control section 702 may acquire the beam index of another user and decrease only the transmission power of the transmission data associated with the position to which the control channel of another user is allocated, by a predetermined value. In this case, assume that the transmitting apparatus generates a control signal including beam indexes of a plurality of communicating users using beams and transmits this control signal to receiving apparatus 700.

### (Embodiment 6)

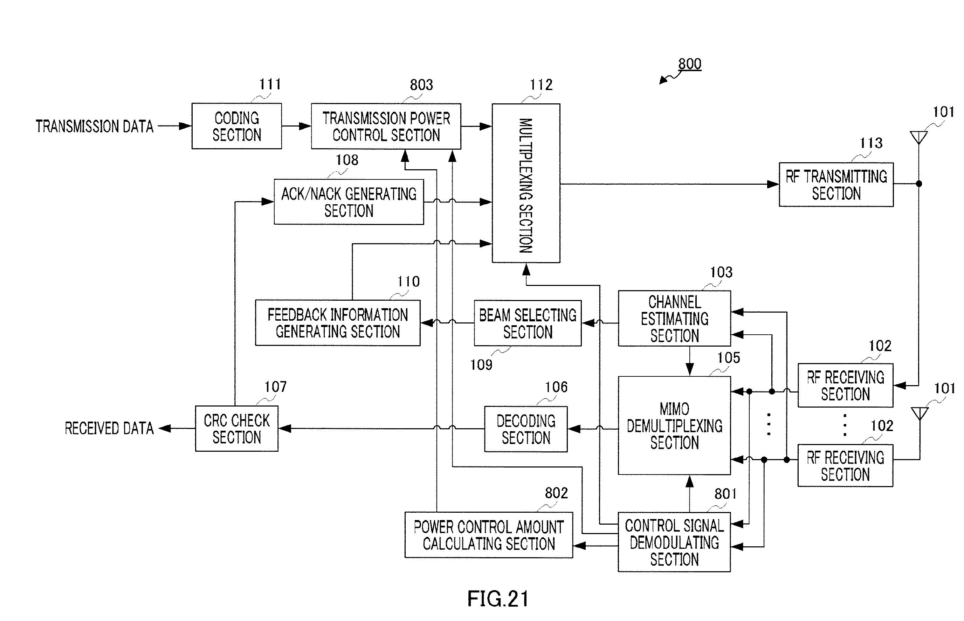

FIG.21 is a block diagram showing the configuration of receiving apparatus 800 according to Embodiment 6 of the present invention. FIG.21 is different from FIG.18 in adding power control amount calculating section 802 and replacing control signal demodulating section 701 and transmission power control section 702 by control signal demodulating section 801 and transmission power control section 803, respectively.

Control signal demodulating section 801 demodulates a control signal outputted from RF receiving section 102 and outputs a beam index included in the demodulated control signal to MIMO demultiplexing section 105 and multiplexing section 112. Further, control signal demodulating section 801 outputs the beam index for other users included in the demodulated control signal to transmission power control section 803 and the number of multiplexing beams for other users included in the demodulated control signal to power control amount calculating section 802. Further, assume that the transmitting apparatus according to the present embodiment generates a control signal including beam indexes of a plurality of communicating users by beams and the number of multiplexing beams for other users, and transmits this control signal to receiving apparatus 800.

Power control amount calculating section 802 calculates the amount of power control based on the number of multiplexing beams for other users outputted from control signal demodulating section 801. For example, in a case where power control amount x [dB] is given when the number of multiplexing beams for other users is 1, x-10*LOG10 (2) [dB] is given when the number of multiplexing beams for other users is 2, and x-10*LOG10 (3) [dB] is given when the number of multiplexing beams for other users is 3. Thus, power control amount calculating section 802 calculates the amount of power control such that the true value of the amount decreases in proportion to the number of users. The calculated amount of power control is outputted to transmission power control section 803.

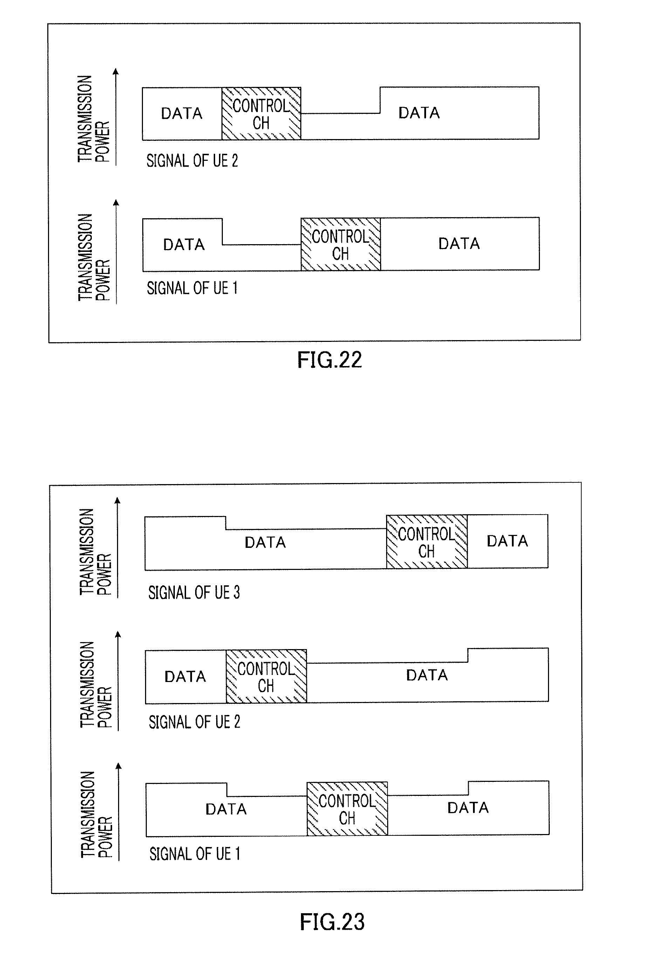

According to the amount of power control outputted from power control amount calculating section 802, transmission power control section 803 performs transmission power control for only the transmission power of the transmission data associated with the position to which the control channel of other users is allocated, in transmission data outputted from coding section 111, based on the beam index of other users outputted from control signal demodulating section 801. FIG.22 and FIG.23 illustrate this state. FIG.22 illustrates a case where the number of multiplexing beams is two, and FIG.23 illustrates a case where the number of multiplexing beams is three. Thus, transmission power control section 803 controls the transmission power of transmission data associated with a position to which a control channel of another user is allocated, such that the transmission power decreases according to the number of multiplexing beams. By this means, it is possible to reduce interference, caused by transmission data transmitted from the terminal, on the control channel of another user and prevent an increase in the reduced amount of transmission power of transmission data when the number of multiplexing beams is large, thereby maintaining received quality of transmission data.

As described above, according to Embodiment 6, by controlling the transmission power of the transmission data associated with the position to which the control channel of another user is allocated such that the transmission power decreases according to the number of multiplexing beams, it is possible to reduce interference, caused by transmission data transmitted from the terminal, on the control channel of another user and prevent an increase in the reduced amount of transmission power of transmission data when the number of multiplexing beams is large, thereby maintaining received quality of transmission data.

### (Embodiment 7)

Although a case has been described with the above-described embodiments where the frequency bandwidth used for data transmission and the frequency bandwidth for beam selection are the same, a case will be explained with Embodiment 7 of the present invention where the frequency bandwidth used for data transmission is wider than the frequency bandwidth for beam selection.

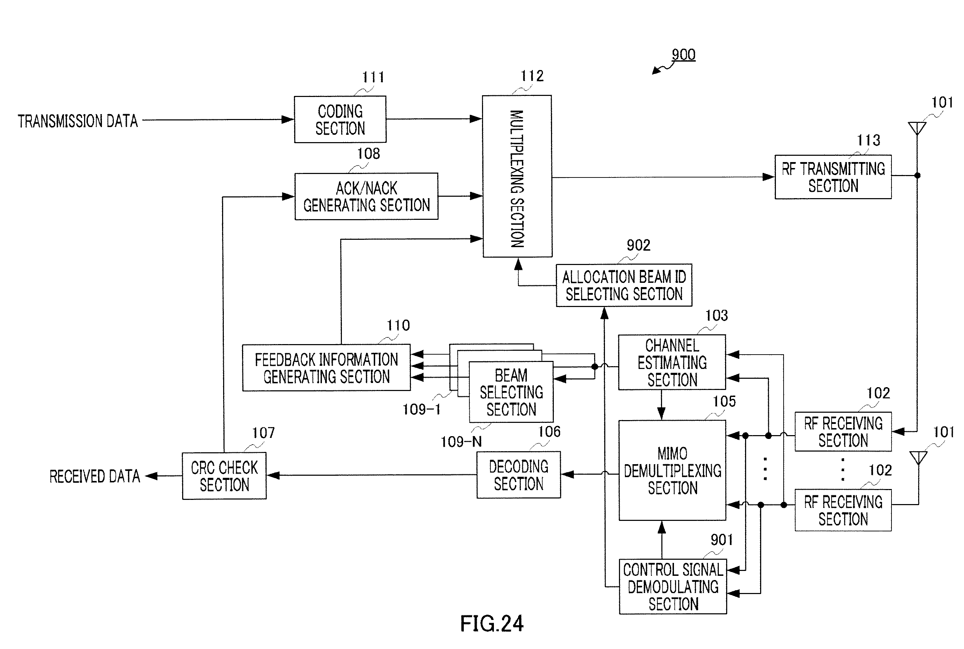

FIG.24 is a block diagram showing the configuration of receiving apparatus 900 according to Embodiment 7 of the present invention. FIG.24 is different from FIG.3 in adding allocation beam ID selecting section 902 and replacing control signal demodulating section 104 and beam selecting section 109 by control signal demodulating section 901 and beam selecting sections 109-1 to 109-N, respectively.

Beam selecting sections 109-1 to 109-N are associated with data transmission frequency bands and associated with, for example, RB (Resource Block) 1 to RB N, respectively. Beam selecting sections 109-1 to 109-N each measure received quality of beams in the frequency bands by multiplying the associated channel matrixes of the frequency bands in the channel matrixes outputted from channel estimating section 103, by predetermined weights associated with the beams, and select the beam of the highest received quality. The index of the selected beam is outputted to feedback information generating section 110.

Control signal demodulating section 901 demodulates a control signal outputted from RF receiving section 102 and outputs the beam index per frequency band included in the control signal to MIMO demultiplexing section 105 and allocation beam ID selecting section 902.

Allocation beam ID selecting section 902 selects the beam index that is most frequently applied to frequency bands assigned to receiving apparatus 900, based on the beam index per frequency band outputted from control signal demodulating section 901, and outputs the selected allocation beam ID to multiplexing section 112.
Here, an allocation beam ID is the same as the beam index associated with the allocation position of a control channel and specifies the allocation position of the control channel.

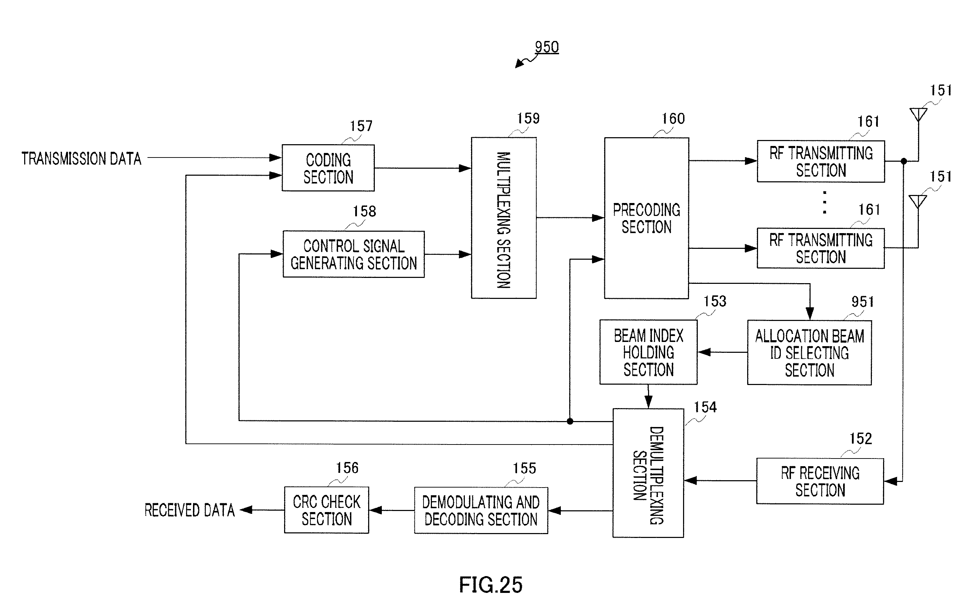

FIG.25 is a block diagram showing the configuration of transmitting apparatus 950 according to Embodiment 7 of the present invention. However, FIG.25 is different from FIG.5 in adding allocation beam ID selecting section 951.

Allocation beam ID selecting section 951 decides the beam index that is most frequently applied to frequency bands assigned to receiving apparatuses, as an allocation beam ID, and outputs the allocation beam ID to beam index holding section 153.

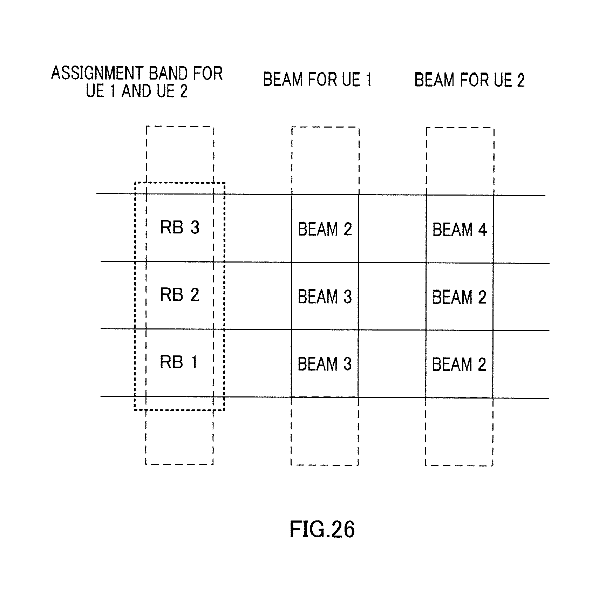

The allocation beam ID selecting method in allocation beam ID selecting section 902 will be explained below using FIG.26. Here, assume that there are two receiving apparatuses UE 1 and UE 2, and frequency bands assigned to UE 1 and UE 2 are RB 1 to RB 3. Further, as shown in FIG.26, beam 3 is used in RB 1 and RB 2 and beam 2 is used in RB 3 in UE 1, and, as shown in FIG.26, beam 2 is used in RB 1 and RB 2 and beam 4 is used in RB 3 in UE 2. These RBs and beam indexes are reported to UEs by a control signal.

In this case, allocation beam ID selecting section 902 of UE 1 recognizes that beam 3 is a beam index that is most frequently applied and assigned to RB 1 to RB 3 in UE 1, and selects beam 3 as the allocation beam ID.

On the other hand, allocation beam ID selecting section 902 of UE 2 recognizes that beam 2 is the beam index that is most frequently applied and assigned to RB 1 to RB 3 in UE 1, and selects beam 2 as the allocation beam ID.

Multiplexing section 112 of UE 1 and UE 2 allocates the control channel to the region associated in advance with the allocation beam ID (i.e., beam index) selected in allocation beam ID selecting section 902. By this means, the control channel of UE 1 and the control channel of UE 2 are allocated to different regions, so that it is possible to prevent mutual interference.

As described above, according to Embodiment 7, by selecting a beam index that is most frequently applied to frequency bands assigned to the receiving apparatus, as an allocation beam ID, and allocating a control channel to the region associated in advance with the selected allocation beam ID, control channels transmitted from a plurality of receiving apparatuses are allocated to different regions, so that it is possible to prevent mutual interference.

Further, receiving apparatus 900 has transmission power control section 702 as shown in FIG.18, and transmission power control section 702 may acquire the allocation beam ID of another user and decrease only the transmission power of transmission data associated with a position to which the control channel of another user is allocated, by a predetermined value.

### (Embodiment 8)

The configuration of the receiving apparatus according to Embodiment 8 of the present invention is the same as the configuration shown in FIG.24 in Embodiment 7, with differences in part of function, and therefore will be explained using FIG.24.

In FIG.24, control signal demodulating section 901 demodulates a control signal outputted from RF receiving section 102 and outputs the beam indexes of the reference frequency band and other frequency bands to MIMO demultiplexing section 105 and allocation beam ID selecting section 902.

Allocation beam ID selecting section 902 selects the beam index associated with the reference frequency band based on the beam indexes of the reference frequency band and other frequency bands outputted from control signal demodulating section 901, as an allocation beam ID, and outputs the selected allocation beam ID to multiplexing section 112.

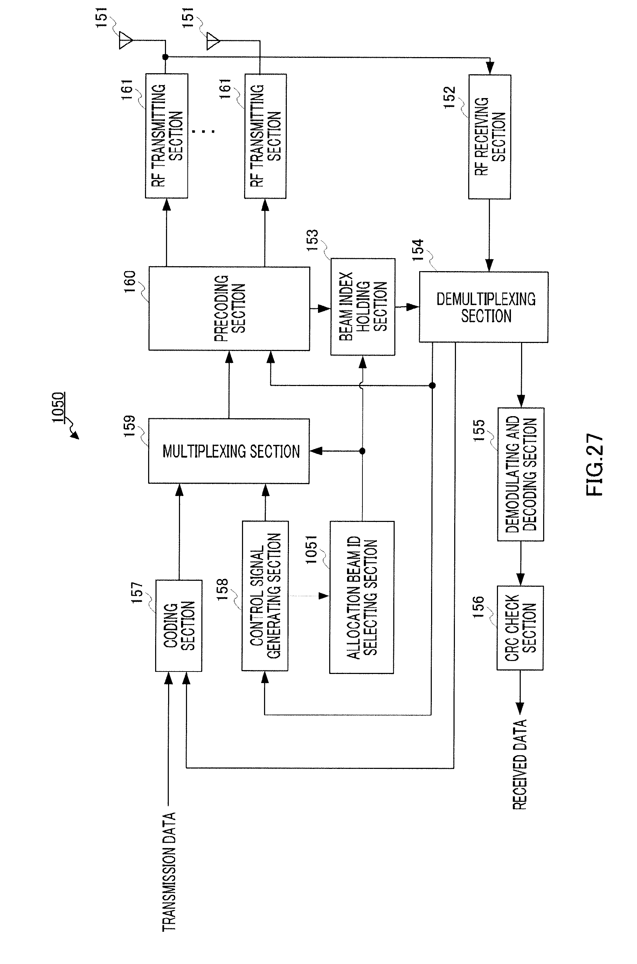

FIG.27 is a block diagram showing the configuration of transmitting apparatus 1050 according to Embodiment 8 of the present invention. FIG.27 is different from FIG.25 in replacing allocation beam ID selecting section 951 by allocation beam ID selecting section 1051.

Allocation beam ID selecting section 1051 selects the beam index associated with the reference frequency band based on the beam indexes of the reference frequency band and other frequency bands outputted from control signal generating section 158, as an allocation beam ID, and outputs the selected allocation beam ID to beam index holding section 153 and multiplexing section 159.

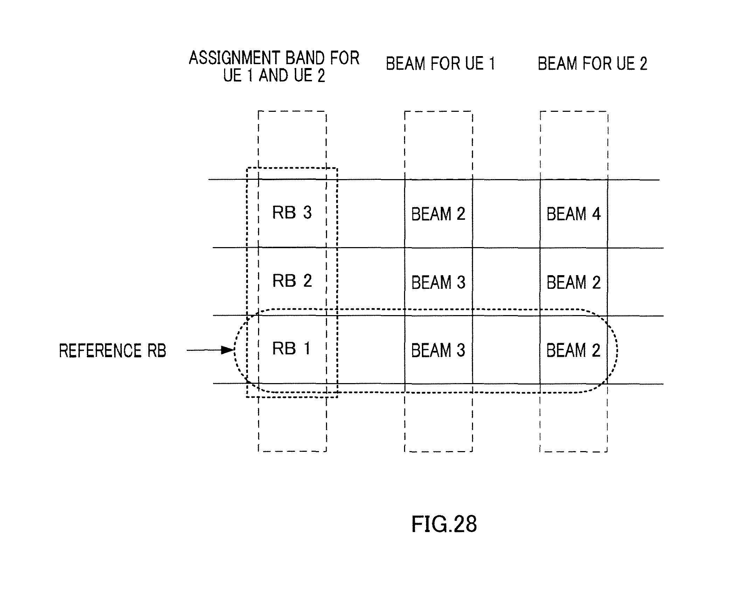

The allocation beam ID selecting method in allocation beam ID selecting section 1051 will be explained below using FIG.28. Here, assume that there are two receiving apparatuses UE 1 and UE 2, and the frequency bands assigned to UE 1 and UE 2 are RB 1 to RB 3. Further, as shown in FIG.28, beam 3 is used in RB 1 and RB 2 and beam 2 is used in RB 3 in UE 1, and, as shown in FIG.28, beam 2 is used in RB 1 and RB 2 and beam 4 is used in RB 3 in UE 2. These RBs and beam indexes are reported to UEs by control signals. However, although the reference RB is RB 1, the present embodiment is not limited to this.

In this case, allocation beam ID selecting section 1051 of UE 1 recognizes that beam 3 is the beam index that is applied to RB 1, which is the reference RB in RB 1 to RB 3 assigned to UE 1, and selects beam 3 as the allocation beam ID.

On the other hand, allocation beam ID selecting section 1051 of UE 2 recognizes that beam 2 is the beam index that is applied to the reference RB in RB 1 to RB 3 assigned to UE 1, and selects beam 2 as the allocation beam ID.

Multiplexing section 112 of UE 1 and UE 2 allocates a control channel to the region associated in advance with the allocation beam ID (i.e., beam index) selected in allocation beam ID selecting section 1051. By this means, the control channel of UE 1 and the control channel of UE 2 are allocated to different regions, so that it is possible to prevent mutual interference.

As described above, according to Embodiment 8, by selecting as an allocation beam ID a beam index applied to a reference frequency band in frequency bands assigned to the receiving apparatus and allocating a control channel to the region associated with the selected allocation beam ID even when the frequency bandwidth for data transmission is wider than the frequency bandwidth for beam selection, control channels transmitted from a plurality of receiving apparatuses are allocated to different regions, so that it is possible to prevent mutual interference.

Further, receiving apparatus 900 has transmission power control section 702 as shown in FIG.18, and transmission power control section 702 may acquire the allocation beam ID of another user and decrease only the transmission power of transmission data associated with a position to which the control channel of another user is allocated, by a predetermined value.

Further, although a case has been described with the present embodiment where the reference frequency band is reported from the transmitting apparatus to the receiving apparatus, if the reference frequency band is set in advance in the transmitting apparatus and receiving apparatus, the reference frequency band needs not be reported.

Although cases have been described with the above-described embodiments where the numbers identifying beams are referred to as beam indexes, beam indexes may be referred to as PMIs (Precoding Matrix Indicators).

Further, a block used in above-described embodiments is merely a processing unit and needs not be comprised of long blocks and short blocks.

Although a case has been described with the above embodiments as an example where the present invention is implemented with hardware, the present invention can be implemented with software.

Furthermore, each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No.2006-201322, filed on July 24, 2006, Japanese Patent Application No.2007-109345, filed on April 18, 2007 and Japanese Patent Application No.2007-188573, filed on July 19, 2007, including the specifications, drawings and abstracts, are incorporated herein by reference in their entirety.

### Industrial Applicability

The transmitting apparatus, receiving apparatus and communication method according to the present invention can improve throughput in the MIMO system that performs precoding processing and are applicable to, for example, the mobile communication system.

## Claims

1. A receiving apparatus comprising:
a receiving section that receives a signal after precoding processing in a transmitting apparatus of communicating party;
a beam selecting section that selects a beam of a highest received quality from a plurality of beams formed by the transmitting apparatus based on the received signal;
a control channel generating section that, using an index showing the selected beam as feedback information, generates a control channel including the feedback information;
an allocating section that allocates the generated control channel to a region associated with a received beam based on information associating the plurality of beams with regions to which the control channel is allocated in a block storing data; and
a transmitting section that transmits the control channel allocated to the region associated with the received beam, to the transmitting apparatus.

2. The receiving apparatus according to claim 1, further comprising a path loss information generating section that generates path loss information to estimate a distance to the transmitting apparatus,
wherein a region to which the control channel is allocated is provided in a region different from regions associated with the plurality of beams when the distance to the transmitting apparatus is within a predetermined range, and the allocating section allocates the control channel to the region associated with the received beam when the distance to the transmitting apparatus is estimated to be over the predetermined range based on the path loss information.

3. The receiving apparatus according to claim 1,
wherein the path loss information comprises a modulation scheme and coding information used by the transmitting apparatus.

4. The receiving apparatus according to claim 1,
wherein the allocating section further comprises an interleaving section that associates the plurality of beams with respective interleaving patterns and interleaves the generated control channel by an interleaving pattern associated with the received beam.

5. The receiving apparatus according to claim 1,
wherein the allocating section associates modes of multi input multi output, precoding and open-loop transmission diversity, with the regions to which the control channel is allocated, and allocates the control channel based on information associating the plurality of beams with the regions to which the control channel is allocated, in regions associated with the precoding.

6. The receiving apparatus according to claim 1, further comprising a transmission power control section that makes transmission power of transmission data a predetermined value lower than transmission power of the control channel.

7. The receiving apparatus according to claim 6,
wherein the transmission power control section lowers transmission power of transmission data associated with a region to which a control channel of another user is allocated.

8. The receiving apparatus according to claim 7, further comprising a power control amount calculating section that calculates an amount of power control to lower the transmission power of the transmission data.

9. The receiving apparatus according to claim 1, further comprising an allocation beam selecting section that, when a frequency bandwidth for data transmission is wider than a frequency bandwidth for beam selection, selects a beam that is most frequently applied in frequency bands for data transmission assigned to the receiving apparatus,
wherein the allocating section allocates the control channel to a region associated with the beam selected in the allocation beam selecting section.

10. The receiving apparatus according to claim 1, further comprising an allocation beam selecting section that, when a frequency bandwidth for data transmission is wider than a frequency bandwidth for beam selection, selects a beam that is applied to a frequency band as a reference band in frequency bands for data transmission assigned to the receiving apparatus,
wherein the allocating section allocates the control channel to a region associated with the beam selected in the allocation beam selecting section.

11. A transmitting apparatus comprising:
a holding section that holds information associating a plurality of beams formed by a transmitting apparatus with regions in a block for a control channel allocated by a receiving apparatus of a communicating party, and an index of a formed beam directed to the receiving apparatus;
a receiving section that receives the control channel transmitted from the receiving apparatus; and
a demultiplexing section that demultiplexes the received control channel based on a region associated with the held index of the beam.

12. The transmitting apparatus according to claim 11,
wherein, based on path loss information for estimating a distance to the receiving apparatus, the demultiplexing section demultiplexes the control channel which is allocated to a region different from regions associated with the plurality of beams when the distance to the receiving apparatus is within a predetermined range, and which is allocated to the region associated with the held index of the beams when the distance to the receiving apparatus is over the predetermined range.

13. The transmitting apparatus according to claim 11,
wherein the demultiplexing section further comprises a deinterleaving section that associates the plurality of beams with respective interleaving patterns and deinterleaves the received control channel by an interleaving pattern associated with the held index of the beam.

14. The transmitting apparatus according to claim 11,
wherein the demultiplexing section associates modes of multi input multi output, precoding and open-loop transmission diversity, with the regions to which the control channel is allocated, and demultiplexes the received control channel based on information associating each of the plurality of beams with the regions to which the control channel is allocated, in regions associated with the precoding.

15. The transmitting apparatus according to claim 11, further comprising an allocation beam selecting section that, when a frequency bandwidth for data transmission is wider than a frequency bandwidth for beam selection, selects a beam that is most frequently applied every receiving apparatus in frequency bands for data transmission assigned to the receiving apparatus of a communicating party,
wherein the holding section holds an index of the beam selected in the allocation beam selecting section.

16. The transmitting apparatus according to claim 11, further comprising an allocation beam selecting section that, when a frequency bandwidth for data transmission is wider than a frequency bandwidth for beam selection, selects a beam that is applied to a frequency band as a reference band every receiving apparatus, in frequency bands for data transmission assigned to the receiving apparatus of a communicating party,
wherein the holding section holds an index of the beam selected in the allocation beam selecting section.

17. A communication method comprising:
an allocating step of allocating a control channel to a region associated with a received beam based on information associating a plurality of beams formed by a transmitting apparatus with regions to which the control channel is allocated by a receiving apparatus to a block storing data;
a transmitting step of transmitting the control channel allocated to the region associated with the received beam, to the transmitting apparatus;
a receiving step of receiving the control channel transmitted from the receiving apparatus; and
a demultiplexing step of demultiplexing the received control channel based on the region associated with an index of a beam directed to the receiving apparatus.
